# FASCICULE DE BREVET EUROPEEN

(11) **EP 2 182 224 B1**
(45) Date de publication et mention de la délivrance du brevet: **10.08.2011**
(21) Numéro de dépôt: 09306007.7
(22) Date de dépôt: 26.10.2009
(51) Int. Cl.: F16B 21/06

(54) **Système de liaison séparable de deux composants**
Trennbares Verbindungssystem für zwei Bestandteile
Separable connection system for two components

(30) Priorité: 29.10.2008 FR 0806011
(43) Date de publication de la demande: 05.05.2010
(73) Titulaire: MBDA France, 75016 Paris (FR)
(72) Inventeur: Argillier, Fabien, 92350 Le Plessis Robinson (FR); Durand, François, 78114 Magny les Hameaux (FR)
(74) Mandataire: Hauer, Bernard

(56) Documents cités:
- EP-A- 0 467 295
- DE-A1- 4 040 337
- DE-A1- 4 117 351
- GB-A- 1 534 301
- US-A- 1 091 449
- US-A- 2 509 081
- US-A- 3 014 744
- US-A1- 2005 002 730

## Description

La présente invention concerne un système de liaison séparable de deux composants ou analogues, destiné à assurer le maintien en position des composants l'un par rapport à l'autre et à autoriser par la suite, à un moment donné, leur séparation par un mouvement relatif engendré par ledit système.

Le terme "composant" est à considérer dans son sens large et peut désigner tout élément, pièce, dispositif, montage, sous-ensemble, ensemble, etc... susceptible d'être assemblé à un autre composant identique ou non par l'intermédiaire dudit système de l'invention, jusqu'à un moment précis où l'on souhaite procéder à leur séparation.

Le système de liaison séparable peut ainsi trouver des applications dans de nombreux domaines techniques.

Par exemple, dans une application préférentielle quoique non exclusive, le système peut être implanté dans une munition incluant un vecteur, tel qu'un missile. En effet, on sait que certaines parties de la munition sont séparées les unes des autres lors de la mise à feu et durant la trajectoire. Tel est notamment le cas entre le culot ou fond de la munition et le système d'accélération ou de propulsion du missile liés entre eux par des montages spécifiques portant, en plus d'équipements particuliers, les systèmes de liaison séparable et angulairement répartis autour d'un espace annulaire interne prévu entre le culot et le système d'accélération.

Les systèmes de liaison séparable utilisés usuellement comportent généralement un mécanisme de liaison entre les deux composants séparables du montage, l'un fixe, par exemple une platine, lié au culot, l'autre mobile, par exemple un support de flottement, lié au système d'accélération, et un dispositif de commande du mécanisme de liaison pour entraîner son déplacement et la séparation des composants.

Ces systèmes sont actuellement de deux types.

Dans le premier type, le mécanisme de liaison est une broche à billes, maintenue sur le support mobile par vissage et dont les billes, radialement en saillie à l'extrémité de la broche par l'action d'un axe central mobile de la broche, sont insérées dans une butée rapportée sur la platine fixe. Lors de l'actionnement du dispositif de commande lié à l'axe mobile de la broche par l'intermédiaire d'un anneau, ledit axe coulisse par rapport à la broche et met en correspondance des rainures ménagées sur celui-ci avec les billes saillantes qui s'effacent alors dans les rainures et désolidarisent la broche de la butée solidaire de la platine fixe. Les deux composants du culot et du système d'accélération sont alors libérés et séparés l'un de l'autre.

Un montage de ce type de système interdit tout mouvement angulaire. En effet, l'inconvénient d'un déplacement angulaire est de perdre contact avec l'ensemble des billes, ce qui risque d'entraîner une concentration des efforts sur un nombre restreint et trop faible de billes, avec en outre un risque de matage. Par ailleurs, l'utilisation de plusieurs billes a pour inconvénient de n'offrir qu'une génératrice par bille pour tout contact. De plus, le sertissage de l'axe avec l'anneau est de faible dimension, ce qui limite l'effort de traction pour le désaccouplement.

Dans le second type, le mécanisme de liaison du système est à rupture et comprend un élément à casser sous l'action du dispositif de commande entraînant le mécanisme.

Dans un premier cas, l'élément à casser tel qu'un axe est disposé perpendiculairement à l'effort de traction engendré par le dispositif et est porté à ses extrémités par un étrier fixé à la platine et en son milieu par un tirant fixé au support de flottement et relié au dispositif de commande. La rupture se fait en deux endroits de l'axe, par cisaillement.

Dans un second cas, l'axe à casser est disposé parallèlement et coaxialement à l'effort de traction en étant lié à ses extrémités à la platine et au support.

La rupture est due à l'allongement de l'axe par striction de la section. Le moment de rupture est difficilement maîtrisable.

L'effort de rupture, par cisaillement ou par allongement, est l'inconvénient majeur de ces deux montages. Par ailleurs, l'incertitude du moment de rupture est préjudiciable à une simultanéité de séparation, risquant d'engendrer un coincement dans le cas d'un montage avec plusieurs systèmes de liaison séparable.

Par ailleurs, par le document US 3 014 744, on connaît déjà un système de liaison séparable de deux composants, comportant un mécanisme de liaison desdits composants et un dispositif de commande dudit mécanisme de liaison pour entraîner la séparation desdits composants,
- ledit mécanisme de liaison étant à déformation élastique et comprenant, selon un axe longitudinal, au moins :
   ■ une tige ayant une extrémité élargie fendue longitudinalement et élastiquement déformable, et fixée, à son autre extrémité, à l'un desdits composants ;
   ■ une aiguille mobile axialement dont une extrémité est introduite dans ladite extrémité élargie de la tige pour la maintenir en position ouverte et dont l'autre extrémité est reliée audit dispositif de commande ; et
   ■ un corps à trou axial, fixé à l'autre composant et entourant lesdites extrémités coopérantes de ladite tige et de ladite aiguille, en étant lié axialement à cette dernière et comportant, dans ledit trou, une butée axiale annulaire contre laquelle s'applique ladite extrémité élargie de ladite tige ; et
- ledit dispositif de commande étant à déplacement axial, selon ledit axe longitudinal, et agissant sur ladite aiguille du mécanisme de liaison pour l'éloigner de ladite extrémité élargie de la tige et, par l'action de ladite butée du corps lié à ladite aiguille déplacée, faire passer ladite extrémité élargie élastiquement déformable de sa position ouverte à une position fermée et permettre le passage relatif de ladite tige à travers ladite butée du corps.

La présente invention a pour objet de remédier aux inconvénients des systèmes cités en premier lieu et concerne un perfectionnement au système de liaison séparable du document US 3 014 744 permettant notamment un maintien en place des différents éléments liés entre eux, y compris un réglage possible pour pallier les tolérances de fabrication, et une séparation lors du mouvement relatif à un instant choisi, à moindre effort.

A cet effet, le système de liaison séparable de deux composants, du type mentionné en dernier lieu est remarquable en ce que ladite aiguille est maintenue axialement en position par rapport à ladite tige par un anneau déformable porté par un élément de serrage du composant sur ledit corps et s'appliquant contre un rebord annulaire externe de ladite aiguille.

Ainsi, selon l'invention, on utilise la combinaison de l'élasticité de l'extrémité élargie de la tige et du déplacement axial de l'aiguille mue par le dispositif de commande pour, d'une part, lier les deux composants et, d'autre part, les séparer, sans aucune rupture d'une quelconque pièce et avec un effort de séparation relativement faible, fonction de l'élasticité de l'extrémité élargie pour passer de sa position ouverte initiale à sa position fermée, et en tout cas inférieur à celui nécessaire pour rompre le mécanisme antérieur. On remarque aussi la fiabilité de réalisation totalement mécanique d'un tel mécanisme de liaison.

Avantageusement, ladite extrémité élargie de ladite tige se présente sous la forme d'une tête sphérique fendue longitudinalement. Et ladite butée axiale du corps définit alors une portée annulaire sphérique complémentaire de la tête sphérique.

Ainsi, un léger battement angulaire est rendu possible, ce qui permet d'absorber les tolérances de fabrication des pièces constitutives du mécanisme et du montage associé, et de faciliter la mise en place du système. La surface de contact entre la tête sphérique et la butée axiale reste aussi identique dans toutes les positions angulaires admises, contrairement au système à broche à billes. Et le contact de la tête sphérique avec la portée de la butée est alors surfacique assurant un meilleur fonctionnement et positionnement du mécanisme, au lieu d'être linéaire selon une génératrice pour chaque bille de la broche.

Dans un mode préféré de réalisation, ladite tête sphérique comporte au moins deux fentes ménagées dans des plans longitudinaux perpendiculaires en séparant ladite tête sphérique en quatre quartiers identiques élastiquement déformables, au centre desquels peut s'introduire l'extrémité correspondante de ladite aiguille pour la maintenir en position initiale ouverte. Pour obtenir une plus grande élasticité, lesdites fentes peuvent se prolonger dans la tige, au-delà de ladite tête sphérique.

Dans une autre forme de réalisation, ladite extrémité élargie de ladite tige présente une forme conique fendue longitudinalement.

En particulier, ladite butée axiale est ménagée sur un élément annulaire monté autour de ladite tige et rapporté par vissage sur ledit corps. Et la fixation de ladite tige au composant correspondant est, de préférence, du type par vissage, l'extrémité, opposée à celle élargie, étant filetée et traversant un orifice ménagé dans ledit composant, et un écrou de serrage assurant la fixation de ladite tige.

Ainsi, le vissage de l'écrou sur la tige permet de maintenir l'aiguille en place par pincement de son extrémité par l'extrémité élargie élastiquement déformable, qui se presse contre celle engagée de l'aiguille. De plus, grâce à l'extrémité filetée de la tige, on peut régler le système selon la distance séparant la platine et le support de flottement de chaque montage, laquelle distance peut varier selon les jeux et défauts inhérents à la fabrication et lesdits montages en présence. Tous les jeux selon l'axe de chaque système sont ainsi rattrapés et, grâce à cela, la séparation des différents systèmes de liaison prévus sur les montages se fera simultanément. S'il y avait une légère inclinaison, le battement angulaire l'absorberait.

Par ailleurs, on remarque que ladite aiguille est non seulement pincée par la tête sphérique élastiquement déformable, mais encore est maintenue axialement en position par rapport à ladite tige par l'anneau déformable porté par l'élément de serrage du composant sur ledit corps et s'appliquant contre un rebord annulaire externe de ladite aiguille. Ainsi, dans le cas de l'apparition de vibrations ou autres, l'anneau de maintien assure tout déplacement éventuel et empêche tout déverrouillage intempestif au repos entre l'aiguille et la tige.

En outre, la fixation de ladite tige au composant correspondant est du type par vissage, l'extrémité, opposée à celle élargie, étant filetée et traversant un trou ménagé dans ledit composant, et un écrou de serrage assurant la fixation de ladite tige.

De plus, la liaison de ladite aiguille audit dispositif de commande comporte de préférence un écrou de fixation recevant l'extrémité filetée de l'aiguille opposée à celle introduite dans ladite tige, et une vis dudit dispositif.
Les figures du dessin annexé feront bien comprendre comment l'invention peut être réalisée. Sur ces figures, des références identiques désignent des éléments semblables.
La figure 1 représente une munition et ses différentes parties constitutives.
La figure 2 montre, en perspective partielle schématique, des systèmes de liaison séparable de l'invention associant deux composants de la munition devant être séparés.
Les figures 3, 4, 5 et 6 sont des vues en coupe longitudinale dudit système de liaison de l'invention selon un exemple préféré de réalisation et représenté dans ses différentes phases de fonctionnement depuis la liaison des composants, figure 3, jusqu'à leur séparation totale, figure 6.
Les figures 3A et 5A sont des coupes transversales agrandies des positions ouverte et fermée respectives de ladite tête sphérique fendue, élastiquement déformable, passant par les plans III-III et V-V des figures 3 et 5.
La figure 7 est une vue en perspective de la tige élastiquement déformable du mécanisme de liaison.

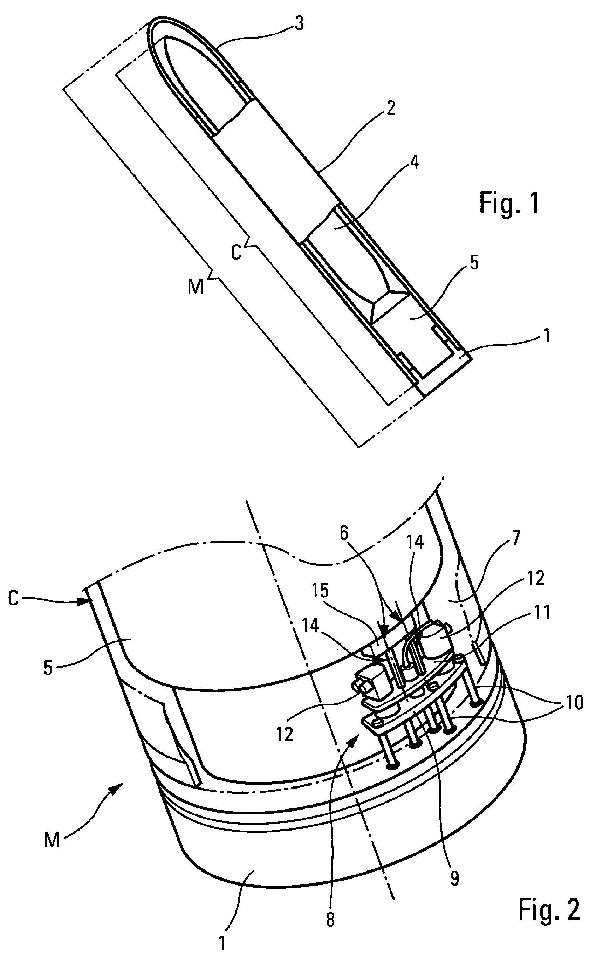

La munition M représentée sur la figure 1 se compose usuellement de plusieurs parties (ou étages) cylindriques assemblées, désignées ici culot ou partie arrière 1, tube ou partie centrale 2 et coiffe ou partie avant 3, à l'intérieur desquelles se trouve un composite C comprenant un missile 4 (système de guidage et charge militaire non illustrés) lié au système d'accélération et de basculement 5 et qui, lors de la mise à feu du composite et durant la trajectoire du vol, sont amenées à se séparer.

Pour cela, dans la réalisation illustrée et agrandie de la figure 2, l'assemblage entre le culot 1 et le système d'accélération et de basculement 5 du composite C est assuré par des systèmes de liaison séparable 6 conformément à l'invention et qui sont, dans cet exemple, au nombre de deux. A cet effet, on prévoit, dans l'espace annulaire disponible interne 7 entre le culot et le système d'accélération, un montage spécifique 8 constitué de deux platines parallèles, l'une inférieure 9 fixée au culot 1 par des tirants 10 ou analogues et l'autre, supérieure 11, désignée support de flottement, reliée au système d'accélération 5 par l'intermédiaire des systèmes de liaison 6 de l'invention décrits ci-après. Sur ces montages, sont prévus des équipements particuliers 12 disposés entre ladite platine 9 et ledit support de flottement 11 et portés aussi sur ce dernier.

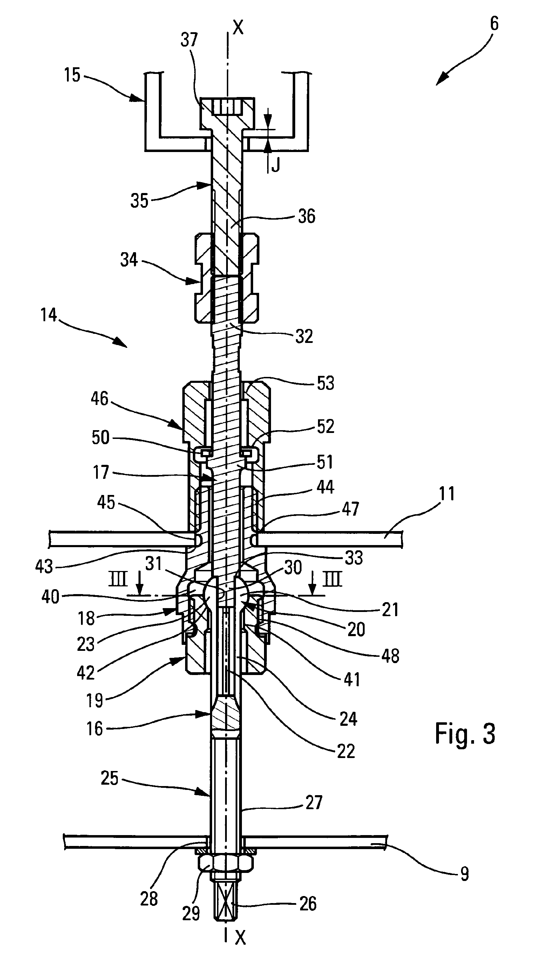

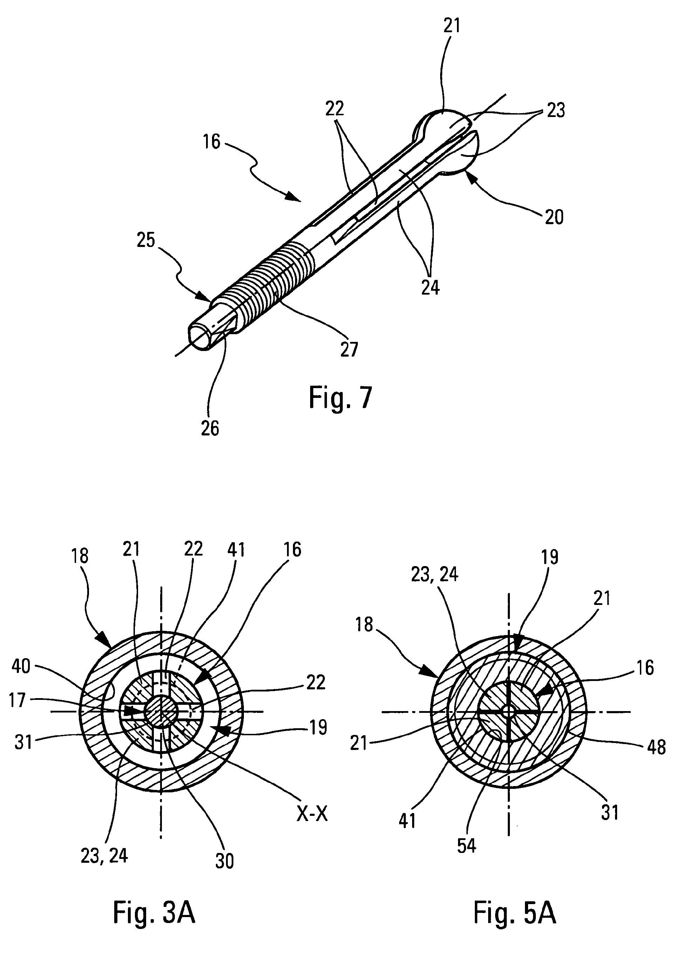

Comme le montre la figure 3, le système de liaison séparable 6 représenté comporte un mécanisme de liaison 14 entre la platine fixe 9, liée au culot, et le support mobile 11, lié au système d'accélération et, donc, au composite C, et un dispositif de commande 15 du mécanisme de liaison 14 pour entraîner la séparation du culot 1 (platine) du système d'accélération 5 (support) du composite. Bien évidemment, les dispositifs de commande 15 associés aux montages 8 agissent simultanément sur les mécanismes de liaison 14 que ces montages comportent.

Dans l'exemple de réalisation illustré, le mécanisme de liaison 14 se compose, selon un axe longitudinal X-X parallèle à l'axe du composite, d'une tige élastiquement déformable 16 liée à la platine 9, d'une aiguille coulissante 17 liée au dispositif de commande 15 et coopérant avec la tige 16, d'un corps cylindrique annulaire 18 fixé au support de flottement 11 et muni d'un élément à butée axiale annulaire 19 pour la tige élastiquement déformable.

En particulier, la tige 16 montrée sur les figures 3 et 7 présente une extrémité élargie 20 élastiquement déformable qui est, dans cet exemple préféré, sous la forme d'une tête sphérique 21 d'un diamètre supérieur à celui de la tige et ayant deux fentes traversantes 22 ménagées dans des plans longitudinaux perpendiculaires pour délimiter ainsi quatre quartiers ou pétales identiques 23. Aussi, pour assurer une certaine élasticité de l'extrémité 20, les fentes 22 se prolongent dans la tige 16 au-delà de la tête sphérique 21 jusqu'à environ le tiers, voire la moitié, de la longueur de la tige en formant ainsi des doigts allongés 24 à tête sphérique élastiquement déformables. Les fentes 22 ménagées dans la tête sphérique 21 permettent aux quartiers ou doigts de se rapprocher les uns vers les autres en direction de l'axe X-X et, donc, de diminuer le diamètre initial de la tête sphérique, qui occupe une position ouverte sur les figures 3 et 7, sous un moindre effort, comme on le verra plus tard. L'extrémité opposée 25 de la tige 16 présente une partie filetée 27 qui traverse un trou 28 ménagé dans la platine et qui reçoit un écrou de serrage 29 fixant la tige 16 à la platine selon l'axe X-X. Pour maintenir la tige (en rotation) lors du serrage de l'écrou avec une clé ou analogue, la partie filetée 27 se termine par un embout cylindrique à méplats 26. Bien entendu, avant son montage sur la platine, le corps 18 et l'élément de butée 19 sont agencés autour de la tige 16.

L'aiguille 17, quant à elle, présente une forme cylindrique allongée dont une extrémité 30 est lisse et s'introduit par ajustement dans le canal interne cylindrique 31 délimité par les doigts allongés déformables 24 à tête sphérique 21 de l'extrémité de la tige 16. La distance d'introduction de l'extrémité lisse 30 est sensiblement égale à la tête sphérique 21, de sorte que celle-ci est maintenue en position initiale ouverte, et cette distance est définie par un épaulement externe 33 de l'extrémité lisse 30, qui bute axialement contre l'extrémité élargie 20 à tête sphérique de la tige. Ainsi, quand l'extrémité lisse 30 de l'aiguille est insérée dans la tête sphérique déformable 21 reposant sur l'élément à butée axiale annulaire 19, comme on le verra ci-après, la platine 9 et le support de flottement 11 du montage 8 sont verrouillés l'un à l'autre.

L'extrémité opposée 32 de l'aiguille est filetée pour s'engager par vissage dans un écrou de fixation 34 reliant le dispositif de commande 15 à l'aiguille 17 par l'intermédiaire d'une vis 35 dont la tige filetée 36 coopère avec l'écrou pour venir buter contre l'extrémité filetée 32 de l'aiguille. Ainsi, l'aiguille 17 et la vis 35 forment un tout, par l'écrou de liaison 34. On voit par ailleurs, sur la figure 3, qu'un jeu axial J existe entre le dispositif de commande 15 et la tête 37 de la vis 35 de manière à absorber quelques mouvements longitudinaux dus à l'environnement extérieur au montage.

Le corps cylindrique 18 comporte un trou axial 40 qui est traversé par l'aiguille 17 et qui entoure les extrémités coopérantes respectivement à tête sphérique 21 de la tige et lisse 30 de l'aiguille. Ce corps cylindrique 18 se centre dans le support de flottement 11 en se fixant sur lui, comme on le verra ultérieurement, et porte, selon l'axe X-X, l'élément à butée axiale annulaire 19.

En particulier, cet élément annulaire 19 a son trou axial 41 en continuité de celui du corps, pour le passage de la tige, lequel trou 41 se termine, du côté de l'aiguille, par une portée ou cuvette sphérique 42 contre laquelle s'applique la tête sphérique 21 de la tige. Bien entendu, les dimensions de la portée 42 et de la tête 21 sont concordantes. Ainsi, le contact entre l'élément à butée 19 et la tige élastiquement déformable 16 s'effectue par une portion de surface sphérique annulaire autorisant un débattement angulaire relatif de la tige 16 liée à la platine 9 par rapport au corps 18 lié au support de flottement 11 dans toutes les directions à la manière d'une articulation à rotule. On comprend ainsi que le serrage de l'écrou 29 de la tige 16 sur la platine tend à tirer la tige contre la platine et donc à presser les doigts élastiquement déformables 24 contre la portée sphérique 42 et par suite à pincer l'extrémité lisse 30 de l'aiguille.

Cet élément à butée axiale annulaire 19 se monte par une liaison par vissage 48 dans le trou axial 40 du corps 18 et ce dernier présente un épaulement annulaire externe 43 formant un plan de pose contre lequel s'applique le support de flottement 11 pour que l'extrémité filetée 44 du corps, issue de l'épaulement annulaire 43 et opposée à celle recevant l'élément à butée 19, traverse un trou de passage 45 prévu dans le support 11 et émerge au-dessus de celui-ci.

Un écrou de retenue 46 se visse alors sur l'extrémité filetée 44 du corps et s'applique par son bord transversal 47 sur le support 11 en le pinçant et en l'immobilisant contre le corps.

De plus, lorsque les systèmes 6 sont utilisés dans des environnements sévères par exemple à fortes vibrations, chaque mécanisme de liaison 14 peut comprendre un anneau de maintien 50 en position axiale de l'aiguille 17 par rapport à la tige 16 malgré le pincement de son extrémité lisse 30 par les doigts élastiquement déformables 24. Pour cela, on prévoit sur l'aiguille un rebord annulaire externe 51 sur lequel repose l'anneau, lui-même proche, de l'autre côté, d'un épaulement annulaire interne 52 ménagé à l'intérieur de l'écrou de retenue 46. Cet anneau 50 est avantageusement déformable et empêche le recul axial de l'aiguille 17 évitant tout déverrouillage intempestif avant le lancement du missile.

Quant au dispositif de commande 15 du système 6, il est à déplacement axial et peut être par exemple un entraîneur ou analogue associé au mouvement du système 5.

Lors de la mise à feu du missile, le fonctionnement du système de liaison séparable selon l'invention se déroule de la manière suivante.

Tout d'abord, dans l'application précitée, les différents systèmes de liaison 6 prévus sur les montages spécifiques 8 reliant le culot 1 au système d'accélération 5 du missile sont tous dans la même position et réglés de façon appropriée. C'est-à-dire, comme le montrent les figures 3 et 3A, que chaque aiguille 17 des mécanismes de liaison 14 est implantée dans la tête sphérique 21 en appui sur l'élément 19 et empêche ainsi le rapprochement des quartiers sphériques de la tête, ce qui verrouille mécaniquement la tige 16 fixée à la platine 9 au reste du mécanisme lié au support de flottement 11 par l'action des doigts élastiques 24 en position ouverte contre la portée sphérique 42 de l'élément à butée axiale annulaire 19. Les montages sont ainsi verrouillés.

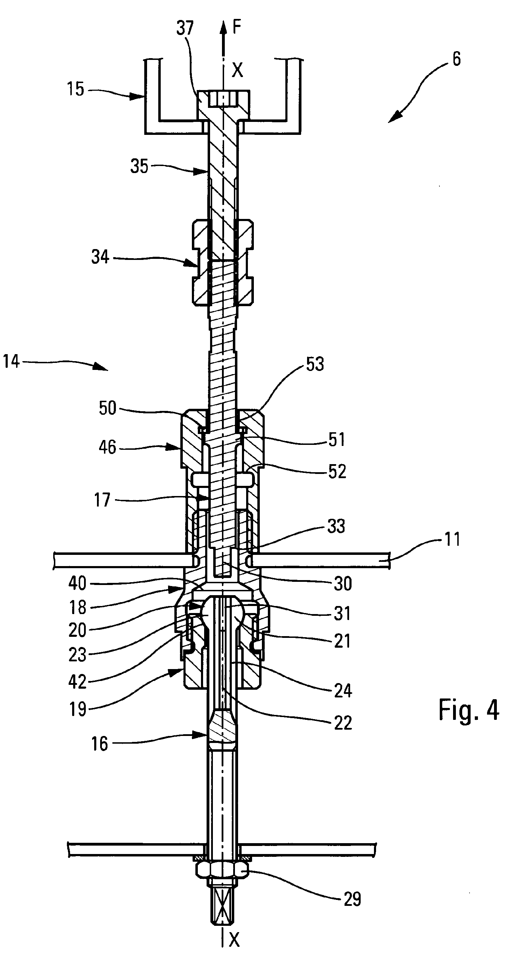

Comme le montre maintenant la figure 4, lorsque le dispositif de commande 15 commence son déplacement axial ou sa translation selon la flèche F de l'axe X-X, il neutralise d'abord le jeu J présent entre celui-ci et la tête 37 de la vis de liaison 35 avec le mécanisme, c'est-à-dire l'aiguille, qui est nécessaire pour absorber d'éventuels mouvements longitudinaux, axiaux, dus à l'environnement extérieur.

En poursuivant son déplacement axial selon la flèche F, le dispositif de commander 15, par l'intermédiaire de la vis 35, tire sur l'aiguille, ce qui entraîne, d'une part, la déformation de l'anneau de maintien 50 qui, sous l'action de l'effort de traction engendré par le déplacement axial du dispositif selon l'axe X-X, s'efface de l'épaulement annulaire 52 de l'écrou 46 et, d'autre part, le recul de l'extrémité lisse 30 de l'aiguille du canal central 31 délimité pour les quartiers 23 de la tête sphérique élastiquement déformable 21 de la tige 16. Les doigts 24 occupent toujours leur position initiale ouverte, mais ne sont plus verrouillés dans cette position par l'aiguille comme le montre la figure 4. Le coulissement de l'aiguille 17 selon la flèche F se poursuit jusqu'à ce que son rebord annulaire externe 51, qui entraîne l'anneau 50, vienne en contact par ce dernier, avec le fond transversal 53 de l'écrou de retenue 46.

Les systèmes 6 sont alors déverrouillés puisque les têtes sphériques 21 sont simplement portées par les éléments à butée 19, mais non séparés.

Sous l'entraînement du dispositif de commande 15, l'aiguille 17 continue à coulisser selon la flèche F le long de l'axe X-X et entraîne avec elle, par la liaison axiale entre son rebord annulaire externe 51 et le fond transversal 53 de l'écrou, l'ensemble constitué par l'écrou 46, le support de flottement 11, le corps cylindrique 18 et l'élément à butée axiale 19 solidaires les uns des autres.

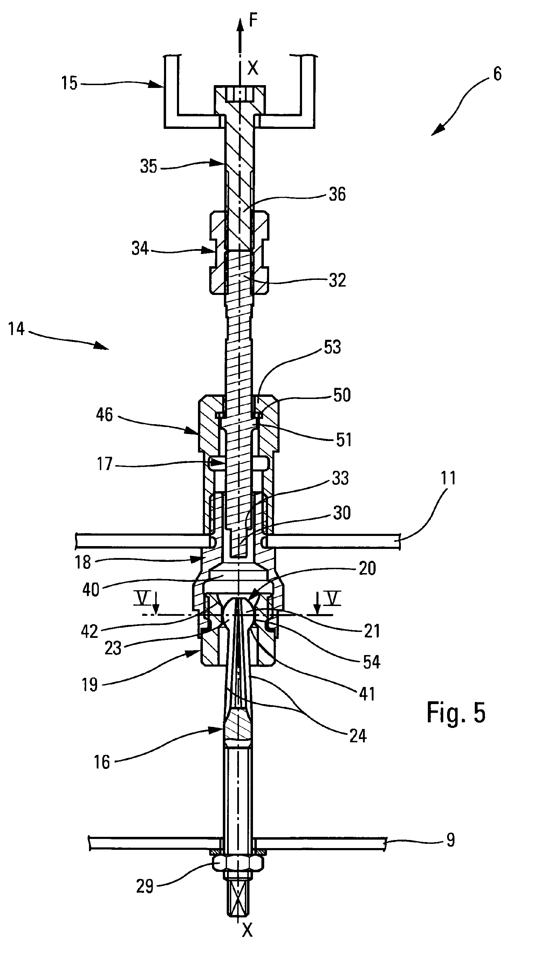

A ce moment là, comme le montrent les figures 5 et 5A, sous l'action de la portée sphérique 42 de l'élément 19 qui s'éloigne de la tige 16, les doigts élastiquement déformables 24 convergent progressivement radialement les uns vers les autres en direction de l'axe X-X jusqu'à venir se toucher lorsque la paroi 54 délimitant le trou axial 41 de l'élément à butée annulaire 19 arrive sur la tête sphérique 22 de ladite tige. Celle-ci occupe alors la position fermée. La séparation est alors acquise.

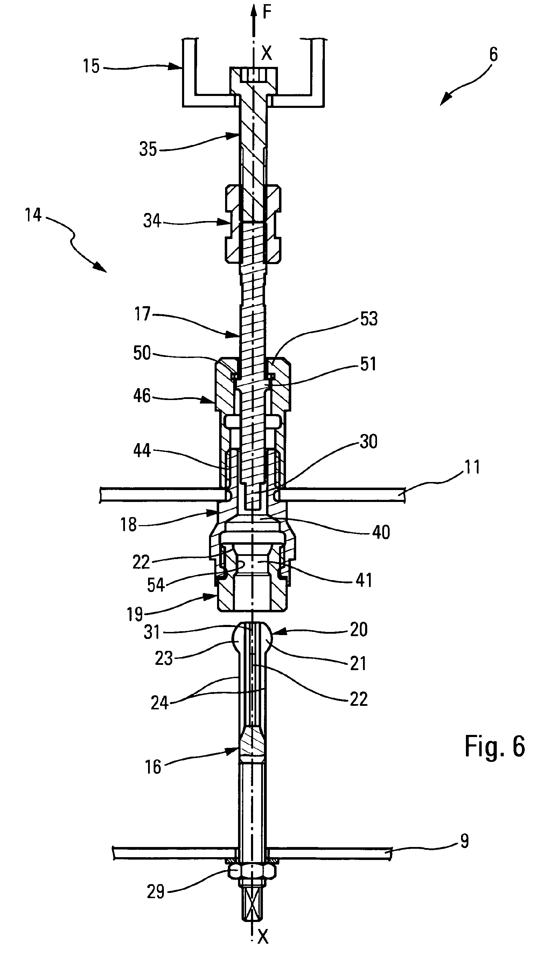

Le mouvement du dispositif de commande continue selon la flèche F jusqu'à la séparation totale représentée sur la figure 6, entre le support de flottement 11 portant, outre les équipements 12, l'ensemble précité du mécanisme de liaison 14, et la platine 9 sur laquelle est fixée la tige 16, dont la tête a repris élastiquement sa position initiale ouverte.

Comme on l'a déjà indiqué, ce système de liaison séparable 6 peut trouver des applications dans de nombreux autres domaines. Ces dimensions et formes peuvent s'adapter à tout type de matériels nécessitant un désaccouplement. De plus, aucune maintenance particulière (graissage, remplacement, ...) n'est à prévoir et sa fiabilité est celle d'un système totalement mécanique sans commande électrique/électronique. Par ailleurs, après sa mise en place, il est possible de démonter puis de remonter le système.

## Revendications

1. Système de liaison séparable de deux composants, du type comportant un mécanisme de liaison (14) desdits composants et un dispositif de commande (15) dudit mécanisme de liaison pour entraîner la séparation desdits composants,
- ledit mécanisme de liaison (14) étant à déformation élastique et comprenant, selon un axe longitudinal, au moins :
■ une tige (16) ayant une extrémité élargie (20) fendue longitudinalement et élastiquement déformable, et fixée, à son autre extrémité (25), à l'un desdits composants ;
■ une aiguille mobile axialement (17) dont une extrémité (30) est introduite dans ladite extrémité élargie (20) de la tige (16) pour la maintenir en position ouverte et dont l'autre extrémité (32) est reliée audit dispositif de commande (15) ; et
■ un corps (18) à trou axial (40), fixé à l'autre composant et entourant lesdites extrémités coopérantes (20-30) de ladite tige et de ladite aiguille, en étant lié axialement à cette dernière et comportant, dans ledit trou, une butée axiale annulaire (19) contre laquelle s'applique ladite extrémité élargie (20) de ladite tige (16) ; et
- ledit dispositif de commande (15) étant à déplacement axial, selon ledit axe longitudinal, et agissant sur ladite aiguille (17) du mécanisme de liaison (14) pour l'éloigner de ladite extrémité élargie de la tige et, par l'action de ladite butée du corps lié à ladite aiguille déplacée, faire passer ladite extrémité élargie élastiquement déformable (20) de sa position ouverte à une position fermée et permettre le passage relatif de ladite tige (16) à travers ladite butée (19) du corps (18),
ledit système étant **caractérisé en ce que** ladite aiguille (17) est maintenue axialement en position par rapport à ladite tige (16) par un anneau déformable (50) porté par un élément de serrage (46) du composant sur ledit corps (18) et s'appliquant contre un rebord annulaire externe (51) de ladite aiguille.

2. Système selon la revendication 1,
**caractérisé en ce que** ladite extrémité élargie (20) de ladite tige (16) se présente sous la forme d'une tête sphérique (21) fendue longitudinalement.

3. Système selon l'une des revendications 1 et 2,
**caractérisé en ce que** ladite butée axiale (19) du corps (18) définit une portée annulaire sphérique (42) complémentaire de la tête sphérique.

4. Système selon l'une des revendications 2 et 3,
**caractérisé en ce que** ladite tête sphérique (21) comporte au moins deux fentes (22) ménagées dans des plans longitudinaux perpendiculaires en séparant ladite tête sphérique en quatre quartiers identiques élastiquement déformables (23), au centre desquels peut s'introduire l'extrémité correspondante (30) de ladite aiguille (17) pour la maintenir en position initiale ouverte.

5. Système selon la revendication 4,
**caractérisé en ce que** lesdites fentes (22) se prolongent dans la tige (16) au-delà de ladite tête sphérique (21).

6. Système selon la revendication 1,
**caractérisé en ce que** ladite extrémité élargie (20) de ladite tige (16) présente une forme conique fendue longitudinalement.

7. Système selon l'une des revendications précédentes 1 à 6,
**caractérisé en ce que** ladite butée axiale (19) est ménagée sur un élément annulaire monté autour de ladite tige (16) et rapporté par vissage sur ledit corps (18).

8. Système selon l'une des revendications précédentes 1 à 7,
**caractérisé en ce que** la fixation de ladite tige (16) au composant correspondant est du type par vissage, l'extrémité (25), opposée à celle élargie, étant filetée et traversant un trou (28) ménagé dans ledit composant, et un écrou de serrage (29) assurant la fixation de ladite tige.

9. Système selon l'une des revendications précédentes 1 à 8,
**caractérisé en ce que** la liaison de ladite aiguille (17) audit dispositif de commande (15) comporte un écrou de fixation (34) recevant l'extrémité filetée (32) de l'aiguille, opposée à celle introduite dans ladite tige, et une vis (35) dudit dispositif.

## Claims

1. A detachable linking system for two components, of the type comprising a linking mechanism (14) for said components and a control device (15) for said linking mechanism so as to cause the detachment of said components,
- said linking mechanism (14) being of the elastic deformation type and comprising, according to a longitudinal axis, at least:
■ one rod (16) having a widened end (20) being longitudinally slit and elastically deformable, and fastened, at its other end (25), to one of said components;
■ one axially movable needle (17) having an end (30) being introduced into said widened end (20) of the rod (16) for holding it in an open position and the other end (32) being connected to said control device (15); and
■ one axial hole (40) body (18), fastened to the other component and surrounding said cooperating ends (20-30) of said rod and of said needle, being axially linked to the latter and comprising, in said hole, an annular axial abutment (19) against which said widened end (20) of said rod (16) is applied; and
- said control device (15) being of the axial shift type, according to said longitudinal axis, and acting on said needle (17) of the linking mechanism (14) for moving it away from said widened end of the rod and, through the action of said abutment of the body linked to said shifted needle, for having said elastically deformable widened end (20) switching from its open position to a closed position and enabling the relative crossing of said rod (16) through said abutment (19) of the body (18),
said system being **characterised in that** said needle (17) is held axially in position with respect to said rod (16) by a deformable ring (50) carried by a clamping member (46) of the component on said body (18) and applying against an external annular edge (51) of said needle.

2. The system according to claim 1,
**characterized in that** said widened end (20) of said rod (16) has the shape of a longitudinally slit spherical head (21).

3. The system according to any of claims 1 and 2, **characterized in that** said axial abutment (19) of the body (18) defines a spherical annular bearing (42) complementary to the spherical head.

4. The system according to any of claims 2 and 3, **characterized in that** said spherical head (21) comprises at least two slits (22) arranged in perpendicular longitudinal planes separating said spherical head into four elastically deformable identical quarters (23), at the centre of which the corresponding end (30) of said needle (17) can be introduced so as to hold it in an initial open position.

5. The system according to claim 4,
**characterized in that** said slits (22) extend into the rod (16) beyond the spherical head (21).

6. The system according to claim 1,
**characterized in that** said widened end (20) of said rod (16) has a longitudinally slit conical shape.

7. The system according to any of preceding claims 1 to 6,
**characterized in that** said axial abutment (19) is arranged on an annular member mounted around said rod (16) and fastened through screwing on said body (18).

8. The system according to any of preceding claims 1 to 7,
**characterized in that** fastening said rod (16) to the corresponding component occurs through screwing, the end (25) opposed to the widened one being threaded and crossing a hole (28) provided in said component, and a clamping nut (29) providing the fastening of said rod.

9. The system according to any of preceding claims 1 to 8,
**characterized in that** linking said needle (17) to said control device (15) comprises a fastening nut (34) receiving the threaded end (32) of the needle, opposite the one introduced in said rod, and a screw (35) of said device.

## Patentansprüche

1. System zur trennbaren Verbindung von zwei Bauteilen, von der Art umfassend einen Mechanismus (14) zur Verbindung der Bauteile und eine Vorrichtung (15) zur Steuerung des Verbindungsmechanismus, um die Trennung der Bauteile herbeizuführen,
- wobei der Verbindungsmechanismus (14) elastisch verformbar ist und an einer Längsachse entlang mindestens Folgendes umfasst:
• einen Stab (16) mit einem erweiterten Ende (20), das in Längsrichtung gespalten und elastisch verformbar ist und der an seinem anderen Ende (25) an einem der Bauteile befestigt ist;
• eine axial bewegliche Nadel (17), deren eines Ende (30) in das erweiterte Ende (20) des Stabes (16) eingeführt wird, um es in geöffneter Position zu halten, und deren anderes Ende (32) mit der Steuervorrichtung (15) verbunden ist; und
• einen Körper (18) mit einem Axialloch (40), der an dem anderen Bauteil befestigt ist und die zusammenwirkenden Enden (20-30) des Stabes und der Nadel umgibt, wobei er axial mit Letzterer verbunden ist und in dem Loch einen ringförmigen Axialanschlag (19) umfasst, gegen den das erweiterte Ende (20) des Stabes (16) anliegt; und
- wobei die Steuervorrichtung (15) entlang der Längsachse axial verschiebbar ist und auf die Nadel (17) des Verbindungsmechanismus (14) einwirkt, um sie von dem erweiterten Ende des Stabes zu entfernen und durch die Einwirkung des Anschlags des Körpers, der mit der verschobenen Nadel verbunden ist, das elastisch verformbare erweiterte Ende (20) von seiner geöffneten Position in eine geschlossene Position zu überführen und den relativen Durchgang des Stabes (16) durch den Anschlag (19) des Körpers (18) hindurch zu ermöglichen,
wobei das System **dadurch gekennzeichnet ist, dass** die Nadel (17) im Verhältnis zu dem Stab (16) axial durch einen verformbaren Ring (50) an Ort und Stelle gehalten wird, wobei der Ring von einem Spannelement (46) des Bauteils auf dem Körper (18) getragen wird und gegen einen äußeren ringförmigen Rand (51) der Nadel anliegt.

2. System nach Anspruch 1, **dadurch gekennzeichnet, dass** das erweiterte Ende (20) des Stabes (16) in Form eines längs gespaltenen sphärischen Kopfes (21) vorliegt.

3. System nach einem der Ansprüche 1 und 2, **dadurch gekennzeichnet, dass** der Axialanschlag (19) des Körpers (18) eine sphärische ringförmige Auflagefläche (42) definiert, welche den sphärischen Kopf ergänzt.

4. System nach einem der Ansprüche 2 und 3, **dadurch gekennzeichnet, dass** der sphärische Kopf (21) mindestens zwei Spalte (22) umfasst, die in rechtwinkligen Längsebenen eingerichtet sind und dabei den sphärischen Kopf in vier identische elastisch verformbare Viertel (23) trennt, in deren Mitte das entsprechende Ende (30) der Nadel (17) eingeführt werden kann, um es in der geöffneten Ausgangsposition zu halten.

5. System nach Anspruch 4, **dadurch gekennzeichnet, dass** die Spalte (22) sich in dem Stab (16) über den sphärischen Kopf (21) hinaus fortsetzen.

6. System nach Anspruch 1, **dadurch gekennzeichnet, dass** das erweiterte Ende (20) des Stabes (16) eine längs gespaltene konische Form aufweist.

7. System nach einem der vorhergehenden Ansprüche 1 bis 6, **dadurch gekennzeichnet, dass** der Axialanschlag (19) an einem ringförmigen Element eingerichtet ist, das um den Stab (16) herum gelagert ist und durch Verschraubung an dem Körper (18) angebracht ist.

8. System nach einem der vorhergehenden Ansprüche 1 bis 7, **dadurch gekennzeichnet, dass** die Befestigung des Stabes (16) an dem entsprechenden Bauteil von der Art einer Verschraubung ist, wobei das Ende (25), das dem erweiterten Ende gegenüberliegt, mit einem Gewinde versehen ist und ein Loch (28) durchsetzt, das in dem Bauteil eingerichtet ist, und wobei eine Spannmutter (29) die Befestigung des Stabes sicherstellt.

9. System nach einem der vorhergehenden Ansprüche 1 bis 8, **dadurch gekennzeichnet, dass** die Verbindung der Nadel (17) mit der Steuervorrichtung (15) eine Befestigungsmutter (34), die das Gewindeende (32) der Nadel aufnimmt, das demjenigen gegenüberliegt, das in den Stab eingeführt wird, und eine Schraube (35) der Vorrichtung umfasst.
